# EUROPEAN PATENT APPLICATION

(11) **EP 3 770 701 A1**
(43) Date of publication of application: **27.01.2021**
(21) Application number: 20185883.4
(22) Date of filing: 15.07.2020
(51) Int. Cl.: G04F 10/10, B64F 5/60, B64F 1/18, G05B 23/00

(54) **APPARATUS FOR MEASURING THE DELAY IN DETECTION OF FAULTY LIGHTS BY AN AIRPORT CONTROL SYSTEM**

(30) Priority: 22.07.2019 IT 201900012510
(71) Applicant: MC Solutiond S.r.l., 20871 Vimercate (MB) (IT)
(72) Inventor: CAZZANI, Maurizio, 20871 Vimercate (MB) (IT)
(74) Representative: Stucovitz, Alessandro

(57) **Abstract**

Apparatus for measuring the delay with which a control system for controlling an airport lights circuit a detects a faulty operation of one or more lights, comprising:
- a master unit (100) designed to be arranged inside the control tower of an airport and to communicate with a slave unit (200), the master unit being provided with detection means for detecting a signal emitted by the control system indicating a faulty operation of one or more lights;
- a slave unit (200) designed to be arranged alongside a runway and to interfere with the lights circuit in order to cause disabling of at least one light and configured to communicate with the master unit (100);
the apparatus being configured to measure a delay time occurring between the disabling of at least one light performed by the slave unit and the detection by the master unit (100) of the signal emitted by the control system.

## Description

The present invention relates to an apparatus for measuring the delay with which a control system for controlling a lights circuit detects faulty operation of said lights.

It is known, in particular, but not exclusively, in the technical sector of airport lighting, that there exists the need to provide signalling lights arranged along the taxiing and take-off/landing runways of airports; it is also known that said lights are installed both in longitudinal rows arranged along the sides and in the centre of the runway parallel thereto, and in rows ("stop bars") arranged transversely with respect to the runway at a predefined distance from each other.

The longitudinal rows mark out the travel path of the aircraft, guiding it during take-off and landing, while the transverse rows control the advancing and stopping movements of several aircraft which are simultaneously present on the same runway, in order to prevent accidents.

For all categories of lights, the regulations impose very strict standards regarding:
- the minimum number of adjacent lights which must be always lit;
- the maximum permissible time for the detection of any faults (i.e. lamps which are not lit);
- the positive detection of which lights are not lit;
these standards defining the category of the airport.

As regards the maximum admissible time for the detection of any faults (i.e. lamps which are not lit) it is also known that the current standards stipulate that the detection systems must signal the fault within 2 seconds in the case of the stop bar lights and within 5 seconds in the case of all other rows of lights (along the travel path, taxiing path, etc.).

It is also known that the current verification procedures for determining the delay with which an unlit light is detected involve the deployment of personnel equipped with a manual chronometer, as follows:
- deployment along the runway of two operators, one of whom is equipped with a two-way radio, responsible for communication, the other operator being responsible for physically interrupting an electrical connection in order to simulate a faulty light;
- deployment of a third operator inside the control tower, in turn equipped with a two-way radio and a manual chronometer;
according to the procedure, the operator present in the tower signals via radio to the first operator along the runway the start of the control sequence and of the manual chronometer;
- at the start of the sequence, the second operator along the runway interrupts the electrical connection of a light, simulating the fault;
- the light control system, which is always active, detects the fault and emits a warning signal, for example an acoustic signal, which is heard by the operator in the tower who is able stop the chronometer, thus defining the end of the recording operation and the calculation of the delay with which the fault was detected.

It is clear that the aforementioned procedure has numerous drawbacks including in particular the approximate nature of manual recording of the delay time, the high percentage of human error, the lack of precision of the times recorded which are subject to variation due to the time needed for manual activation of the procedure, and the impossibility of definitive certification of the recorded times which are always questionable since they are communicated verbally between operators.

The technical problem which is posed, therefore, is that of providing an apparatus for detecting the delay with which a lights control system determines possible faulty operation of at least one light, which is able to solve the problems mentioned above, reducing in particular the degree of human intervention with associated errors.

In connection with this problem it is also required that this apparatus should be able to ensure precise and repeatable - and therefore certifiable - measurements.

In a preferred embodiment it is also desirable that the apparatus should be able to emit a non-modifiable report in any form, i.e. on paper or digitally.

It is also required that the apparatus should be preferably easy and inexpensive to produce and assemble, be able to be easily used by users who are also not specifically specialized, should have small dimensions and be able to be easily transported for positioning in the vicinity of the airport runways.

These results are obtained according to the present invention by an apparatus according to the characteristic features of Claim 1 and by a method according to Claim 12 for measuring the delay with which a system for controlling the efficiency of the lights detects a fault of at least one light.

Further details may be obtained from the following description of a nonlimiting example of embodiment of the subject of the present invention provided with reference to the attached drawings in which:
Figure 1: shows a block diagram of the component parts of the apparatus according to the present invention;
Figure 2: shows a circuit logic diagram of the control tower master unit according to Fig. 1; and
Figure 3: shows a circuit logic diagram of the slave unit 200 along the side of the runway, according to Fig. 1.

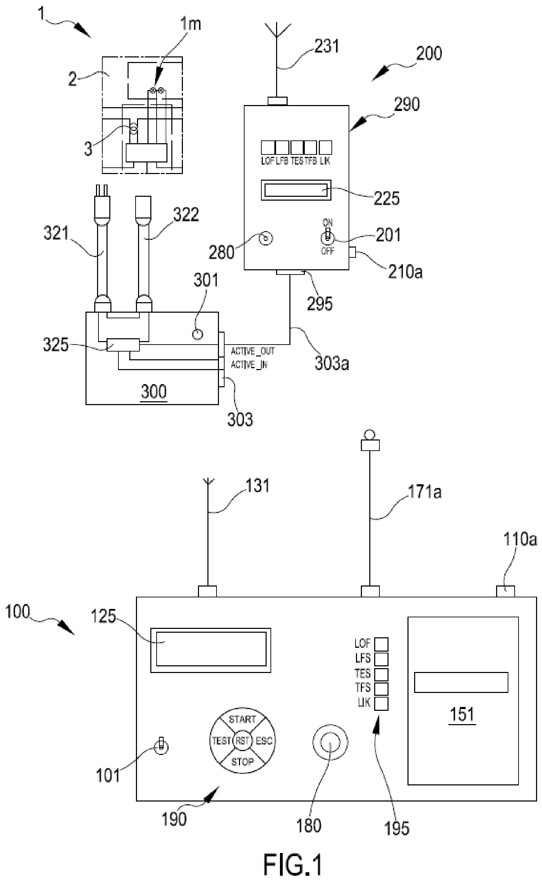

As shown in Fig. 1, a preferred example of embodiment of the measurement apparatus according to the invention comprises:
- a master unit 100 designed to be arranged inside the control tower and to communicate with a slave unit 200 provided with detection means for detecting a signal emitted by the control system indicating faulty operation of one or more lights;
- a slave unit (200) designed to be arranged alongside a runway and to interfere with the lights circuit to be controlled in order to cause disabling of at least one light and to communicate with the master unit (100).

As will emerge more clearly below, the apparatus is configured to measure a delay time occurring between the disabling of at least one light performed by the slave unit and the detection by the master unit of the signal emitted by the control system which indicates said disabling to the control tower.

According to a preferred embodiment, at least one and preferably both the master unit 100 and/or the slave unit 200 is/are configured to measure the delay time, which may in particular be an actual delay time, i.e. net of a transmission and/or processing latency due to the communication between the master and slave units, thus obtaining a very precise measurement.

The transmission and/or processing latency may advantageously be saved in a memory of the respective master unit and/or slave unit, preferably after being calculated by the respective master unit or slave unit by means of one or more communication test cycles.

According to a first example, the measurement of a delay time comprises timing a delay by means of a chronometer 125 of the master unit, which is started upon sending, to the slave unit, of a LAMP_OFF_IN signal requesting disabling of at least one lamp of at least one light of the lights circuit and is stopped upon detection of a signal emitted by the control system of the airport lights circuit which indicates faulty operation of a light. The preferred embodiment during which an actual delay time is measured may also envisage subtracting from the delay timed by the chronometer a transmission and/or processing latency obtained previously, so as to take into account the time lapsing between the start of timing and the actual reception and implementation by the slave unit of the command for disabling of at least one light.

According to a further option, timing of the delay by means of the chronometer 125 of the master unit may be started upon reception from the slave unit of a signal indicating that at least one light has been disabled. In this case a transmission and/or processing latency (needed for sending of the signal from the slave unit to the master unit) may be added to delay timed by the master unit in order to obtain a measurement of an actual delay time which takes into account the time lapsing between the disabling performed by slave unit and the reception of the corresponding signal by the master unit 100.

According to a further example, the measurement of a delay time comprises starting timing of a delay by means of a chronometer 225 of the slave unit when the slave unit causes the disabling of at least one light and stopping the chronometer 225 when the slave unit receives from the master unit a signal indicating that detection of the signal emitted by the control unit has occurred. Preferably, the actual delay time may in this case be obtained by subtracting from the delay timed by the chronometer a transmission and/or processing latency obtained previously, so as to take into account the time occurring between the detection of the signal of the control system by the master unit and the actual reception by the slave unit 200 of a corresponding signal sent by the master unit 100.

It is advantageous if both the master unit and the slave unit measure the delay time, in order to reduce further the measurement imprecision. It is also advantageous if the transceiver means of the master unit and the slave unit are preferably configured so as to produce a transmission and/or processing latency which is substantially the same for communication from the master unit to the slave unit and for communication from the slave unit to the master unit.

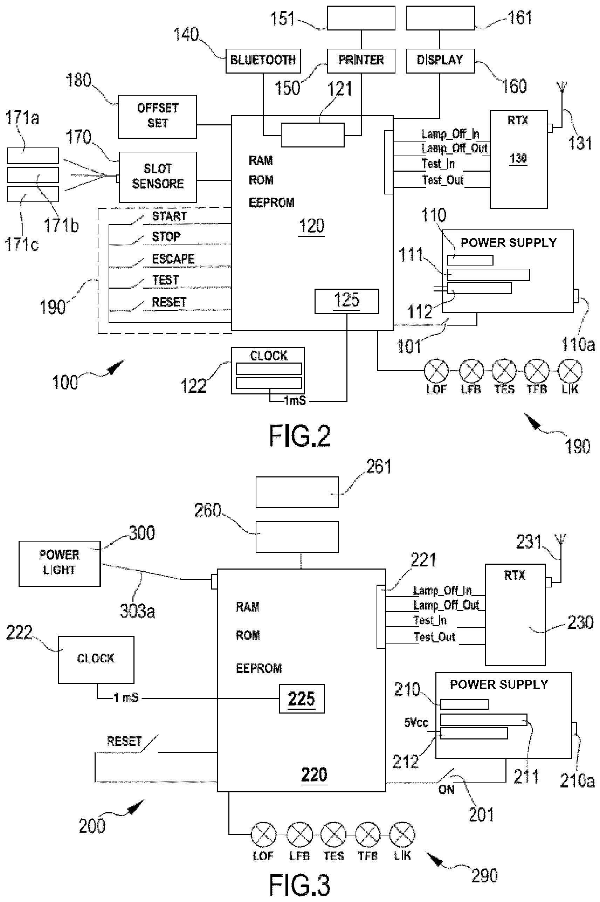

In greater detail and with reference to a preferred embodiment shown in Figs 2,3, the master unit 100 comprises:
MA) a power supply unit which provides an electric voltage to the circuits intended to power the devices of the master unit 100. The power supply (Fig. 2) is, for example, provided by a battery 110, there are also be present an ON activation switch 101.

Recharging of the battery may for example by performed by means of a special connector 110a for connection to a - for example 7.5 volt - dc electric power source by means of a standard battery charger.

The battery 110 is also connected to a power supplier 112 which uses the voltage of the battery to power the circuits of the master unit 110 which may, for example, be powered at 5 volts dc, and/or, in the case of a Bluetooth circuit 140, at 3.3 volts dc.

MB) a microprocessor 120 or similar processing unit which, by means of ROM, RAM and EEPROM memories and at least one serial port 121, manages the inputs, outputs and accessory means, described in detail below, as well as the measurement operations;
MB1) a first chronometer 125 of the master unit 100, situated inside or managed by the microprocessor, for timing the delay times.

In order to obtain time measurements to within an accuracy of one thousandth, the microprocessor preferably employs a clock circuit 122 which uses a quartz oscillator, for example with a frequency of 4.96 MHz, and a divider circuit for obtaining a timing frequency with a precision of at least one thousandth of a second which will be used by the microprocessor to manage the measurement times.

MC) transceiver means, comprising for example an "RTX" transceiver circuit 130 which allows two-way communication, in particular by means of an omnidirectional or directional antenna 131, with the slave unit 200 arranged alongside the runway;
MD) a circuit 140 designed to allow, in particular, the connection between the master unit 100 and a PC (not shown) without the need for electric cables and designed to allow exchange of information, such as for example that useful for the compilation of the data base form certifying the measurements performed.
- the circuit may for example be of the Bluetooth type;

ME) preferably a printer circuit 150 and a thermal printer 151 associated with it for printing a document, for example, certifying the times recorded at the same time as the measurements performed;
MF) means for detecting the signal emitted by the airport lights control circuit may preferably comprise a multifunctional base-piece 170 comprising a multi-contact base which allows the insertion of a dedicated circuit for different types of input, for example: for a microphone 171a, photosensor 171b, electrical contact 171c and the like or, if necessary, a digital connection to a data processing unit of the control system. Depending on the ways in which the system AVL for controlling the airport lights circuit detects and signals the disabling of a light, the most appropriate and precise detection means 170 may be used.

MG) Optionally, an offset circuit 180 allows adjustment of the threshold for activation of the said detection means, in particular of a microphone, photosensor, electrical contact and the like.

A user interface of the master unit, connected to the microprocessor, preferably comprises:
MH) a display circuit 160 with associated LCD screen 161, for displaying the possible commands to be carried out and the outcome of the queries entered;
MI) a keyboard 190, which allows the selection of the operations to be performed by means of associated keys connected to the microprocessor. Preferably the keys comprise:
   Start key: for starting the procedure for measuring the delay time;
   Stop key: for manually interrupting the procedure for measuring the delay time, so as to allow the reading, for example on the display 160, of the recorded values;
   Escape key: for interrupting the procedure in progress;
   Test key: for starting the instrument checking and calibration procedure, so as to pre-set it for the next measurement of the delay time, for example calculating the transmission and/or processing latency;
   Rst key: for zeroing and reinitializing the master unit 110 in the event of faulty operation.
ML) The master unit preferably comprises a plurality of indicator lamps 195, preferably LEDs, which light up in order to signal the operations in progress, respectively:
   LOF (LAMP_OFF_OUT): which indicates the lamp disable request signal transmitted to the slave unit 200;
   LFB (LAMP_OFF_IN): which indicates the lamp disabled return signal transmitted to the master unit 100;
   TES: which indicates the latency measurement signal transmitted to the slave unit 200;
   TFB: which indicates the return signal transmitted from the slave unit 200 to the master unit 100;
   LIK: which indicates activation of transmission or reception.

In greater detail and with reference to a preferred embodiment shown in Figs 2,3, the slave unit 200 comprises preferably:
SA) a power supply unit which provides an electric voltage to the circuits intended to power the devices of the slave unit.

The power supply (Fig. 3) may for example be provided by a battery 210 connected to a recharging circuit 211 which can be connected by means of a special connecting connector 210a to an electric power source, e.g. a 7.5 volt direct current supplied by a standard battery charger. A power supplier 212 which uses the voltage of the battery for powering the circuits of the slave unit, in particular designed to provide a 5 volt dc power supply to said circuits. An "ON" switch 201 may be arranged in the power supply unit for activating the start of the procedure for switching on and supplying power to the circuits of the devices present in the slave unit 200.

SB) a processing unit, in particular a microprocessor 220 which, via one or more ROM, RAM, EEPROM memories, manages the input and output of signals to/from the slave unit 2 and the measurement operations, if present.

SB1) a chronometer 225 of the master unit 200, situated inside or managed by the microprocessor, for timing the delay times and preferably a latency;
to obtain time measurements to an accuracy of within one thousandth, a clock circuit 222 is preferably provided, said clock circuit using a quartz oscillator with a frequency for example of 4.96 MHz and a divider circuit for obtaining a timing frequency with a precision of at least 1 thousandth of a second which will be used by the microprocessor to manage the measurement times;
SC) transceiver means, in particular comprising an "RTX" transceiver circuit 230 which allows two-way communication, for example by means of an omnidirectional or directional antenna 231, with the master unit 200;

The processing unit may in particular be configured to perform a reinitialization of the slave unit 200, in response to a reset signal 222 received at its input, for example in the event of faulty operation.

A user interface of the slave unit, connected to the microprocessor, preferably comprises:
SF) a display circuit 260 with associated LCD screen 261, for displaying the possible commands to be executed and the outcome of the queries entered;
SG) a multifunctional base 221 which allows insertion of a dedicated circuit for different types of input and output, such as: reset commands 222 for any need to reinitialize the slave unit 200, in the event of faulty operation; lamps, and the like;
SL) indicator lamps 290, preferably LEDs, which light up in order to indicate the operations in progress, such as, respectively:
   LOF (LAMP_OFF_OUT): which indicates the light disable signal sent to the master unit 200;
   LFB (LAMP_OFF_IN): which indicates the light disable command signal sent from the master unit 100;
   TES: which indicates the test signal sent to the master unit 100;
   TFB: which indicates the return signal transmitted from the master unit 100;
   LIK: which indicates activation of transmission or reception.
SI) According to a preferred embodiment, the slave unit 200 comprises a unit 300 for interference with an airport lights circuit, configured to be connected to the lights circuit and cause disabling of at least one light. Said interference unit 300 is preferably a peripheral unit connected to a main unit of the slave unit by means of connection means, such as a connector 295 (Fig. 1) suitable for connection with a cable 303a for connection to the unit 300 for interference with the airport lights circuit. This configuration is preferred because it allows the interference unit 300 to be arranged in the vicinity of the control modules and/or power suppliers of the respective light 1m of the airport lights circuit, which are generally arranged in wells inset in the airport runway. Configuring the unit 300 as a peripheral unit which may be connected at a certain distance from the main unit of the slave unit allows the operator to avoid having to operate the slave unit in a disadvantageous position inside the well.

Said interference unit 300 is preferably configured to be arranged between a module for controlling a light 1m, designed to power and/or control and/or monitor one or more lamps or LEDs of the said light 1m, and at least one lamp or LED of the light 1m and comprises, for example:
-- a connector 303 for connection with a cable 303a for connecting to the connector 295 of the slave unit 200, from which the following commands may be received and transmitted:
   ACTIVE_OUT: command for activating a lamp deactivation relay
   ACTIVE_IN: command for signalling that activation of the relay has been performed;
   so as to disconnect the airport lighting lamp or LED supply circuit and at the same time, by means of the second contact, confirm that activation or deactivation of the said relay has occurred
-- a first male connector 321, for example of the FAA type, for connection to a female socket of the module for controlling and/or monitoring the lamp(s) of the light 1m of the airport series circuit;
-- a second female connector 322 for connection with a lamp or LED which had been previously connected to the module for controlling and/or monitoring the light 1m.

It is clear that it is also possible to use instead other suitable connection means designed to arrange the unit 300 between a lamp of the airport light and the respective power supply and/or control and/or monitoring means in order to interrupt in a controlled manner operation of the lamp.

The unit 300 comprises preferably a relay 325 designed to perform connection/disconnection of the power supply to/from a lamp of the light 1m and to signal to the slave unit 200 the fact that disabling of the airport light has occurred; the relay 325 is preferably connected to the said male connector 321 and female connector 322 and to a power supply of the module 200 which is used to energize the relay 325.

According to a preferred embodiment, both the microprocessor 120 of the master unit 100 and the microprocessor 200 of the slave unit 200 are configured to process the following signals output from or input into respective input/output ports.
TEST_OUT: digital signal, sent to the respective RTX circuit 130 (230) for outputting to the other slave or master unit, so as to start measurement of the transmission and/or processing latency from the master (slave) unit to the slave (master) unit;
TEST_IN: digital signal received in response to the TEST_OUT signal; based on this signal, the microprocessor 120 (220) may quantify a transmission and/or processing latency time for communication from the master (slave) unit to the slave (master) unit.
LAMP_OFF_OUT: light disabling digital signal generated by the microprocessor 120 of the master unit and sent to the RTX circuit 130 for transmission to the slave unit which, once the signal is received, causes disabling of a light lamp circuit; or
light disabling digital signal generated by the microprocessor 220 of the slave unit and sent to the RTX circuit 230 for transmission to the master unit to indicate that disabling of the light lamp circuit has occurred;
LAMP_OFF_IN: digital signal received at the input of the slave unit 200 which processes it in order to perform disabling of the power supply circuit of at least one lamp of a light; or
digital signal received at the input of the master unit 100 in response to the signal LAMP_OFF_OUT, in order to signal that disabling of a light has occurred.

According to a further preferred embodiment, either one of or both the microprocessor 120 of the master unit 100 and the microprocessor 200 of the slave unit 200 may be configured to calculate a respective transmission and/or processing latency, preferably as follows:
generation of a digital signal TEST_OUT, generated by the microprocessor 120;220 of the master or slave unit;
sending of the signal TEST_OUT to the RTX circuit 130;230 of the master or slave unit which transmits it to the other slave unit 200 or master unit 100;
starting, by the microprocessor, of a timing operation for measuring the transmission and/or processing latency from the slave unit to the master unit, preferably substantially at the same as said generating or said sending operation;
reception of a digital signal TEST_IN sent from the other master unit 100 or slave unit 200 in response to the TEST_OUT signal received, and
interruption of the timing for measuring said transmission and/or processing latency upon reception of the response signal TEST_IN, with the generation of a timed value;
halving the timed value in order to obtain a transmission and/or processing latency value for the respective communication from the slave unit or master unit to the master unit or slave unit;
storing said quantified transmission and/or processing latency in a memory, for example a RAM, for subsequent use in the measurement of an actual delay time net of the transmission and/or processing latency.

With this configuration it is therefore possible to quantify the latency time of the radio transmission and any processing necessary for communication between the master unit and the slave unit.

Preferably, the measurement of a transmission and/or processing latency involves performing automatically several times the aforementioned detailed measurement sequence, in order to obtain a transmission and/or processing latency which is an average of the latency values measured in each test sequence, in order to calibrate the apparatus more precisely.

With the structure described above it is possible to perform the measurement of a delay time by means of the following procedure:
-- the slave unit 200 and the respective operator are positioned alongside the runway;
-- the master unit 100 and the operator responsible for the recording operation are positioned inside the airport control tower;
-- the antenna 131 of the master unit 100 is arranged within visual range of the antenna 231 of the slave unit 200 positioned along the runway;
-- the microphone, or other detection means inserted in the multifunctional base of the master unit 100, is positioned in the proximity of the alarm buzzer incorporated in the permanent system AVL for controlling the airport lights, which normally emits an acoustic signal indicating the faulty operation of a light in the airport lights circuit;
-- the procedure for measuring the transmission and processing latency is started by means of the TEST key which performs a two-way test of the radio connection; in this way, the master unit 100 and/or the slave unit sends an encoded signal to the other slave or master unit 200, which responds with a corresponding encoded signal which, once received, allows quantification of the transmission and/or processing latency for communication in the respective transmission direction;
-- subsequently and in order to calibrate more precisely the instrument, a test measurement is repeated automatically in order to establish with precision the transmission and/or processing latency by averaging the test measurements;
-- all the operations may be viewed both on the master unit 100 and on the slave unit 200 by means of the LED indicator lamps:
   TES: which indicates the signal transmitted to the slave unit 200;
   TFB: which indicates the return signal transmitted to the master unit 100;
   LIK: which indicates activation of transmission or reception.
-- optionally, the master unit 100 request the adjustment of the activation level of the microphone or other device.
-- the master unit 100 sends the actual measurement by means of the START key, then the microprocessor, substantially at the same time, starts timing of the delay by means of the chronometer 125 and sends the encoded signal LAMP_OFF_OUT to the slave unit;
-- the slave unit 200, once the signal LAMP_OFF_OUT sent by the master unit 100 has been received (LAMP_OFF_IN), disables the light 1m, for example disabling the power supply of a lamp (e.g. an LED) of the light by means of the disabling unit 300, and responds by sending to the master unit an encoded signal LAMP_OFF_OUT indicating that disabling of the lamp has occurred;
-- At the same time as disabling of the light 1m, the slave unit 200 starts preferably a respective timing of the delay by means of the associated chronometer 225;
-- after a certain delay time following disabling of the light, the permanent control system AVL, reacts and activates the buzzer which emits an acoustic signal indicating a fused lamp. said signal being detected by the microphone of the master unit 100 which stops its chronometer 125 and therefore the timing of the delay;
-- once the time has been detected, the encoded signal LAMP_OFF_OUT is sent to the slave unit 200 in order to indicate that detection of the control system signal has occurred;
- the slave unit 200 receives (LAMP_OFF_IN) the signal LAMP_OFF_OUT sent by the master unit and stops the associated chronometer 225, interrupting timing of the delay on the slave side.

Net of the respective transmission and/or processing latencies, the two units, master and slave, measure the said delay time and are therefore already able to provide a measurement which is more precise and reliable than that of the prior art and which cannot be modified or changed as a result of tampering or human error.

Preferably, the microprocessors of the master and slave units automatically eliminate automatically from the timed delays the respective transmission and/or processing latencies, necessary for communication of the commands between the master unit 100 and the slave unit 200 in both directions and quantified beforehand with the test procedures; the apparatus will therefore issue certification of only the actual delay time which has occurred for detection of the fused lamp.

At the end of the measurement started by the master unit 100, the actual delay time measured will be shown on the respective display 161 of the master unit and display 261 of the slave unit 200.

This important data may then also be printed and/or sent to the computer by means of the Bluetooth circuit.

It is therefore clear how the apparatus or method for measuring the delay in detection of a fault in a light circuit is able, owing to its automatic operation, reduce the errors of human origin, being able moreover to provide a precise and repeatable and therefore certifiable measurement.

In a preferred embodiment, the apparatus is also able to provide a non-modifiable report in any form, be it on paper or digitally.

Although described in connection with a number of embodiments and a number of preferred examples of implementation of the invention, it is understood that the scope of protection of the present patent is determined solely by the claims below.

## Claims

1. Apparatus for measuring a delay with which a control system (AVL) for controlling an airport lights circuit detects a faulty operation of one or more lights of the airport lights circuit, **characterized in that** it comprises:
- a master unit (100) designed to be arranged inside a control tower of an airport and to communicate with a slave unit (200), the master unit being provided with detection means (171a,b,c) for detecting a signal emitted by the control system (AVL) indicating a faulty operation of one or more lights of the airport lights circuit;
- a slave unit (200) designed to be arranged alongside a runway and to interfere with the airport lights circuit in order to cause disabling of at least one light and configured to communicate with the master unit (100);
the apparatus being configured to measure a delay time occurring between the disabling of at least one light performed by the slave unit (200) and the detection by the master unit (100) of the signal emitted by the control system (AVL).

2. Apparatus according to Claim 1, **characterized in that** the master unit (100) and/or the slave unit (200) comprise(s) a processing unit, in particular a microprocessor (120;220), cooperating with at least one memory (ROM, RAM, EEPROM) and configured to manage the measurement of a delay time and/or the communication of input/output signals to/from the said unit (100;200).

3. Apparatus according to Claim 1 or 2, **characterized in that** the master unit (100) and/or the slave unit (200) is/are configured to measure an actual delay time, net of a transmission and/or processing latency due to the communication between the master unit and the slave unit.

4. Apparatus according to Claim 1, 2 or 3, **characterized in that** the master unit (100) and/or the slave unit (200) comprise(s) a chronometer (125;225) synchronized by a clock circuit (122;222) designed to determine a timing frequency with a precision preferably less than or equal to 1 ms.

5. Apparatus according to Claim 3 or 4, wherein said transmission and/or processing latency is saved in a memory of the respective master or slave unit and/or measured by the respective master or slave unit by means of one or more transmission and/or processing test cycles; wherein preferably, the processing unit, in particular the microprocessor is configured to subtract or add said latency from/to a delay time timed by the respective master or slave unit in order to obtain said measurement of the actual delay time.

6. Apparatus according to one of the preceding claims, **characterized in that** said master unit (100) comprises transceiver means (130) designed to perform two-way communication with the slave unit (200); and **in that** the slave unit (200) comprises transceiver means (230) designed to perform two-way communication with the master unit (100); said transceiver means (130;230) preferably comprising an omnidirectional or directional antenna (131) and/or being preferably configured so as to determine a transmission and/or processing latency which is substantially the same for communication from the master unit to the slave unit and for communication from the slave unit to the master unit.

7. Apparatus according to one of the preceding claims, **characterized in that** said master unit (100) comprises connection means (140) for connection to a PC or other data processing unit in order to exchange data, in particular for compilation of a data base form to record one or more delay time measurements performed; said connection means (140) preferably comprising a Bluetooth circuit; and/or **in that** the master unit (100) comprises printing means (150) and optionally a printer (151) associated therewith, suitable for printing a certified report showing one or more measured delay times.

8. Apparatus according to one of the preceding claims, **characterized in that** the detection means (171a,b,c) of the master unit (100), for detecting a signal emitted by the control system (AVL) indicating faulty operation of one or more lights of the airport lights circuit, include a microphone and/or a photosensor and/or an electrical contact and/or a digital connection to a data processing unit of the control system.

9. Apparatus according to one of the preceding claims, **characterized in that** the master unit is configured to communicate with the slave unit by sending at least one request signal (LAMP_OFF_IN) for disabling at least one lamp in the lights circuit and/or at least one signal for indicating that detection of the signal emitted by the control system (AVL) has occurred;
and/or **in that** the slave unit (200) is configured to communicate with the master unit by sending at least one signal (LAMP_OFF_OUT) indicating that disabling of at least one lamp has occurred;
wherein preferably the master unit and/or the slave unit starts or stops a respective timing chronometer (125;225) depending on one of the said signals received or sent.

10. Apparatus according to one of the preceding claims, **characterized in that** the slave unit (200) comprises an interference unit (300) for interfering with an airport lights circuit, configured to be connected to the airport lights circuit and to cause disabling of at least one lamp of a light, said interference unit (300) being preferably a peripheral unit connected to a main unit of the slave unit by means of connection means (295).

11. Apparatus according to Claim 10, **characterized in that** the interference unit (300) comprises:
-- a first connection means (321) for connecting to a control module controlling a light (1m) of the airport lights circuit, the control module being arranged for powering and/or controlling and/or monitoring one or more lamps or LEDs of the light (1m);
-- a second connection means (322) for connecting with at least one lamp of the light (1m) of the airport lights circuit controlled by the control module;
and/or **in that** said interference unit comprises means (325) for performing connection/disconnection of the power supply to/from at least one lamp of the light and for signalling to the slave unit (200) that disabling of the light of the airport lights circuit has occurred.

12. Method for measuring the delay with which a control system for controlling an airport lights circuit detects a faulty operation of one or more lights of the airport lights circuit, comprising:
- arranging a master unit (100) inside a control tower of an airport, said master unit being designed to communicate with a slave unit (200) and being provided with detection means for detecting a signal emitted by the control system indicating faulty operation of one or more lights of the airport lights circuit;
- arranging, alongside the runway, a slave unit (200) adapted for communicating with the master unit (100);
- interfering by means of the slave unit (200) with the airport lights circuit, so as to perform a disabling of at least one light of the airport lights circuit;
- detecting by means of the master unit (100) a signal emitted by the control system which indicates faulty operation caused by said disabling;
- measuring by means of the master unit and/or the slave unit a delay time occurring between the disabling of at least one light performed by the slave unit and the detection by the master unit of said signal emitted by the control system.

13. Method according to the preceding claim, wherein said measurement of a delay time comprises starting a chronometer (125) of the master unit upon sending to the slave unit of a signal (LAMP_OFF_IN) for requesting disabling of at least one lamp of the lights circuit or upon reception from the slave unit of a signal (LAMP_OFF_OUT) indicating that disabling of the at least one lamp has occurred, and stopping the chronometer when said signal emitted by the control system is detected;
and/or wherein said measurement of a delay time comprises starting a chronometer (225) of the slave unit when the slave unit performs the disabling of at least one light, and stopping the chronometer (225) when the slave unit receives from the master unit a signal indicating that detection of the signal emitted by the control system (AVL) has occurred.

14. Method according to one of Claims 12-13, wherein the delay time measured is an actual delay time, net of a transmission and/or processing latency for communication between the master unit and the slave unit.

15. Method according to the preceding claim, wherein said transmission and/or processing latency is obtained from a memory of the respective master or slave unit and/or estimated by the respective master or slave unit by means of one or more communication test cycles carried out between the master unit and the slave unit; wherein, preferably, a processing unit, in particular a microprocessor, of the master or slave unit is configured to subtract or add said latency from/to a delay timed by the respective master or slave unit to obtain said measurement of the actual delay time.
